(19) Europäisches Patentamt
European Patent Office
Office européen des brevets

(11) Veröffentlichungsnummer: **0 031 887**
**B1**

(12) # EUROPÄISCHE PATENTSCHRIFT

(45) Veröffentlichungstag der Patentschrift: **30.01.85**

(51) Int. Cl.$^4$: **C 08 L 83/10**, C 08 G 77/42, C 08 F 283/12

(21) Anmeldenummer: **80107101.0**

(22) Anmeldetag: **15.11.80**

(54) **Copropfpolymerisatdispersionen auf der Basis von Organopolysiloxan, Verfahren zu deren Herstellung und deren Verwendung in Dichtungsmassen.**

(30) Priorität: **28.11.79 DE 2947964**

(43) Veröffentlichungstag der Anmeldung:
**15.07.81 Patentblatt 81/28**

(45) Bekanntmachung des Hinweises auf die Patenterteilung:
**30.01.85 Patentblatt 85/05**

(84) Benannte Vertragsstaaten:
**BE DE FR GB IT NL**

(56) Entgegenhaltungen:
**FR-A-2 106 117**
**US-A-3 075 941**
**US-A-3 488 304**
**US-A-3 655 602**

(73) Patentinhaber: **BAYER AG**
**Konzernverwaltung RP Patentabteilung**
**D-5090 Leverkusen 1 Bayerwerk (DE)**

(72) Erfinder: **Alberts, Heinrich, Dr.**
**Morgengraben 16**
**D-5000 Koeln 80 (DE)**
Erfinder: **Friemann, Hans, Dr.**
**Silesiusstrasse 82**
**D-5000 Koeln 80 (DE)**
Erfinder: **Moretto, Hans-Heinrich, Dr.**
**Formesstrasse 13**
**D-5000 Koeln 80 (DE)**
Erfinder: **Sattlegger, Hans, Dr.**
**Auf dem Heidchen 9**
**D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 031 887 B1

**Beschreibung**

Die Erfindung betrifft bei Raumtemperatur härtbare, stabile Copfropfpolymerisatdispersionen aus endständig OH-funktionellen Organopolysiloxanen und gegebenenfalls eiteren Polydiorganosiloxanen, Polyestern, die gegebenenfalls zusätzlich Polyether enthalten können und gegebenenfalls acyliert sein können und Vinylpolymeren, ein Verfahren zu ihrer Herstellung und die Verwendung dieser Copfropfpolymerisatdispersionen.

Bei Raumtemperatur härtende Polymersysteme auf Basis von Organopolysiloxanen sind bekannt (vergl. W. Noll, Chemie und Technologie der Silikone, Verlag Chemie GmbH., 1968, S. 391 ff).

Ferner ist die Herstellung von modifizierten Organopolysiloxanen nach verschiedenen Arbeitsweisen möglich und bekannt. Pfropfpolymere aus Organosiloxanen und Vinylpolymeren sind beispielsweise in den Patentschriften GB 766 528, GB 806 582, GB 869 482 und DE—AS 1 694 973 beschrieben. In der DE—AS 1 694 973 wird die Anwendung von Organopolysiloxanen mit aufgepropfter organischer Kette und maximal 25% Arylresten in bei Raumtemperatur härtenden 1- oder 2-Komponentenmassen beschrieben. Es wird ausgeführt, daß die erfindungsgemäß eingesetzten Hydroxypolysiloxane in jedem Fall bis zu maximal 25% Arylreste enthalten. Ferner wird ausgeführt, daß die aufgepfropfte organische Kette durch polymerisierte Einheiten von Vinylmonomeren, bevorzugt Styrol und Acrylester, gebildet wird.

Neben den durch Pfropfung modifizierten Organopolysiloxanen sind auch Systeme bekannt, in denen ein ungesättigter Polyester mit einem funktionellen Organopolysiloxan cokondensiert wird. Das erhaltene Cokondensat wird in einem Vinylmonomeren gelöst und das System radikalisch ausgehärtet. In der GB—PS 801 529 werden z.B. ausgehärtete Harze beansprucht, die zu 25—75 Gew.-% aus einem ungesättigten Polyester, 25—75 Gew.-% Vinylpolymerisat und 0,5—30 Gew.-% einer Siloxan-Komponente bestehen. Derartige, während der Vinylpolymerisation durch die Vernetzungsreaktion mit dem ungesättigten Polyester-Organosiloxan-Cokondensat aushärtende, vernetzte und unlösliche Formkörper bildende Massen, sind für die Herstellung von bei Raumtemperatur härtenden Organosiloxanmassen nicht geeignet.

Aliphatische oder gemischt aliphatisch-aromatische Polyester sind wichtige technische Ausgangsprodukte für z.B. Polyurethane und Lacke. Mischungen aus derartigen Polyestern und Organopolysiloxanen sind instabil und nicht lagerfähig, da nach der erfolgten Vermischung in kurzer Zeit eine Trennung der unverträglichen Phasen erfolgt.

Obwohl es wünschenswert wäre, die ausgezeichneten anwendungstechnischen Eigenschaften, die von aliphatischen oder gemischt aliphatisch-aromatischen Polyestern in Polyurethansystemen oder Lacken herrühren — genannt seien Flexibilität und Elastizität, gegebenenfalls Härte und Glanz, Alterungsbeständigkeit usw. — auch zur Herstellung von Organosiloxan-Elastomeren auszunutzen, gelang dies bis heute nicht.

Ferner ist ein bekannter anwendungstechnischer Nachteil von Siliconelastomeren oder sonstigen Siliconmassen, daß aus diesen Massen hergestellt Körper nicht oder qualitativ nur äußerst unbefriedigend zu lackieren sind. Üblicherweise bildet der frisch aufgetragene Lack nur für kurze Zeit eine zusammenhängende Deckschicht aus, die sich im allgemeinen beim Trocknen von der Siliconoberfläche ablöst oder mehr oder weniger große Flächen nicht lackierter Oberfläche freigibt.

Aufgabe der Erfindung war es daher, phasenstabile Mehrphasensysteme aus Organopolysiloxanen, aliphatischen und gemischt aliphatischaromatischen Polyestern zur Verfügung zu stellen.

Es war ferner Aufgabe der Erfindung, Siliconmassen bereitzustellen, die, gegebenenfalls nach Zugabe von Weichmachern, wie z.B. methylengestoppten Organopolysiloxanen, Füllstoffen, Vernetzern, Vernetzungskatalysatoren und die Vernetzung beschleunigenden Komponenten und nach der in der an sich bekannten Weise erfolgten Vernetzung bei Raumtemperatur, problemlos lackierbar sind.

Beide Aufgaben werden dadurch gelöst, daß Mischungen aus Organopolysiloxanen, Polyestern — gegebenenfalls im Gemisch mit anderen im folgenden näher definierten Polymeren — und Vinylmonomeren, gegebenenfalls unter Zusatz von Carbonsäureanhydriden, in Gegenwart von Radikalbildnern einer radikalischen Polymerisation unterzogen werden. Man erhält stabile Dispersionen, die aus einer Polyesterkomponente, einem Organopolysiloxan und polymerisierten Einheiten eines oder mehrerer Vinylmonomerer bestehen und die über polymerisierte Einheiten der eingesetzten Vinylmonomeren querverbrückte Pfropfcopolymere aus Organopolysiloxan und dem eingesetzten Polyester enthalten.

Bei Raumtemperatur härtbare, stabile Copfropfpolymerisatdispersionen, erhältlich durch Pfropfpolymerisation aus Vinylmonomeren in Gegenwart von Mischungen aus Erst- und Zweitpolymeren, wobei als Erstpolymer OH-funktionelle Diorganopolysiloxane der Formel

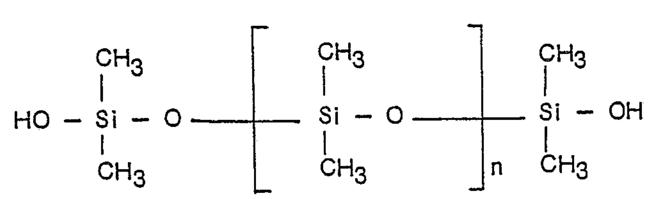

n = 10 bis 5000

und wobei die Methylgruppen bis zu 30 Mol.-% durch Ethyl-, Vinyl- oder Phenylgruppen ersetzt sein können und als Zweitpolymere aliphatische oder gemischt aliphatisch-aromatische Polyester mit einem Molekulargewicht von etwa 800 bis 10 000, einer OH-Zahl zwischen 0,1 und 100 und mit einer Säurezahl von 0,1 bis 80, gegebenenfalls im Gemisch mit gegebenenfalls durch Vinylpolymerisate modifizierten, aliphatischen Polyethern oder Polythioethern mit 1—8 OH-Gruppen pro Molekül, wobei sowohl der Polyester als auch der Polyether, vor, während oder nach der Polymerisation acyliert werden können, eingesetzt werden und wobei Copfropfpolymerisatdispersionen erhalten werden, die über Vinylpolymerisatbrücken verknüpfte Pfropfpolymere aus Erst- und Zweitpolymeren enthalten und die aus

I. 10—90 Gew.-% endständig OH-funktionellen Organopolysiloxanen,
II. 5—85 Gew.-%, gegebenenfalls acylierte Polyestern,
III. 0—50 Gew.-%, gegebenenfalls acylierten Polyethern und
IV. 5—85% polymerisierten Einheiten aus Vinylverbindungen bestehen und

wobei die Summe der Komponenten I—IV stets 100% beträgt.

Ferner sind Gegenstand der Erfindung Copfropfpolymerisatdispersionen, bei denen die Komponente IV aus 5—85 Gew.-% polymerisierten Einheiten aus Vinylestern, α,β-ungesättigten Carbonsäuren, Derivaten α,β-ungesättigter Mono- oder Dicarbonsäuren, Vinylaromaten wie Styrol, α-Methylstyrol oder 4-Chlorstyrol, α-Olefinen wie Ethylen, Propylen, Buten-1 oder Isobutylen, halogenierten Vinylmonomeren wie Vinylchlorid, Vinylidenchloride, Vinylfluorid, Vinylidenfluorid, Tetrafluorethylen, Trifluorchlorethylen, Vinylether wie Ethylvinylether, n-Butylvinylether, Allylverbindungen wie Alkylalkohol, Allylacetat, Allylcarbonate, Diallylcarbonat, Diallylphthalat, Divinylverbindungen wie Divinylbenzol, Divinylether oder (Meth)Acrylsäureestern mehrwertiger Alkohole, oder Gemischen dieser Monomeren besteht, wobei die Summe der Komponenten I—IV stets 100% beträgt.

Gegenstand der Erfindung sind auch Copfropfpolymerisatdispersionen bei denen die Komponente IV aus 0—85 Gew.-% polymerisierten Einheiten aus Vinylacetat und 5—80 Gew.% polymerisierten Einheiten aus (Meth)Acrylsäurealkylester mit 1—8 C-Atomen in der Esteralkylkomponente, (Meth)Acrylsäureamid, N-Alkylsubstituierten (Meth)Acrylsäureamiden, (Meth)Acrylnitril sowie ihren Gemischen, besteht wobei die Summe der Komponenten stets 100% betragt.

Gegenstand der Erfindung sind ferner Copfropfpolymerisatdispersionen, bestehend aus

I. 30—90 Gew.-% endständig OH-funktionellen Organopolysiloxanen,
II. 5—65 Gew.-% aliphatischen oder gemischt aliphatisch-aromatischen Polyestern, die gegebenenfalls acyliert sein können.
III. 0—50 Gew.-% Polyethern, die gegebenenfalls acyliert sein können,
IV. 5—65 Gew.-% polymerisierten Einheiten aus
  a) 5—90 Gew.-% Styrol
  b) 10—95 Gew.-% (Meth) Acrylsäurealkylestern mit 1—8 C-Atomen in der Esteralkylkomponente
  c) 0—85 Gew.-% (Meth)Acrylnitril, wobei die Summe der Komponenten a)-c) stets 100% und die Summe der Komponenten aus I—IV ebenfalls stets 100% beträgt.

Vorzugsweise bestehen die erfindungsgemäßen Copfropf-Polymerisatdispersionen aus

I. 30—90 Gew.-% endständig OH-funktionellen Organopolysiloxanen,
II. 5—65 Gew.-% aliphatischen oder gemischt aliphatisch-aromatischen Polyestern,
III. 5—65 Gew.-% polymerisierten Einheiten aus Vinylacetat.

wobei die Summe der Komponenten I—III stets 100% beträgt.

Ferner ist Gegenstand der Erfindung ein Verfahren zur Herstellung von Copfropfpolymerisatdispersionen, welches dadurch gekennzeichnet ist, daß Mischungen aus
  a) 8—90 Gew.-% endständig OH-funktionellen Organopolysiloxanen,
  b) 4,999—85 Gew.-% aliphatischen oder gemischt aliphatisch-aromatischen Polyestern,
  c) 0—50 Gew.-% eines Polyethers,
  d) 5—85 Gew.-% eines oder mehrerer Vinylmonomerer,
  e) 0,001—2 Gew.-% eines oder mehrerer Radikalbildner,
  f) 0—5 Gew.-% eines Reglers,
  g) 0—5 Gew.-% einer Carbonsäure, eines Carbonsäureanhydrids oder Carbonsäurehalogenids, bei Temperaturen zwischen −20°C und +250°C einer Polymerisations- und gegebenenfalls Acylierungsreaktion unterzogen werden.

Desweiteren sind Gegenstand der Erfindung bei Raumtemperatur vernetzbare Organopolysiloxanmassen, die Copfropfpolymerisatdispersionen und zusätzlich Vernetzer, Härtungskatalysatoren, Füllstoffe und gegebenenfalls weitere Zuschlagstoffe enthalten.

Ferner ist ein Gegenstand der Erfindung die Verwendung von bei Raumtemperatur vernetzbaren Organopolysiloxanmassen, die die erfindungsgemäßen Copfropfpolymerisatdispersionen enthalten, als Ein- oder Zweikomponentensysteme für Dichtungsmassen.

Die Herstellung der Copfropfpolymerisatdispersionen geschieht in der Weise, daß Mischungen aus einem endständigen OH-funktionellen Organopolysiloxan, einem aliphatischen oder gemischt aliphatisch-aromatischen, gegebenenfalls acylierten Polyester*) und einem oder mehrerer Vinylmonomerer in Gegenwart eines Radikalbildners auf eine, die Polymerisation auslösende, Reaktionstemperatur gebracht werden. Falls gewünscht, können auch Mischungen aus endständig OH-funktionellen und nicht funktionellen Organopolysiloxanen in die Reaktionsmischung eingetragen werden. Die Polymerisation kann nach kontinuierlichem oder diskontinuierlichem Verfahren durchgeführt werden. Im Prinzip ist die Reihenfolge der Zugabe der zur Reaktion zu bringenden Komponenten beliebig, die besten Resultate werden aber erzielt, wenn Mischungen aus Siloxan- und Polyesterkomponente und Vinylmonomeren gleichzeitig bei der Durchführung der Polymerisationsreaktion eingesetzt werden.

Die endständig OH-funktionellen Organopolysiloxane sind im wesentlichen linear und werden durch die folgende Formel dargestellt:

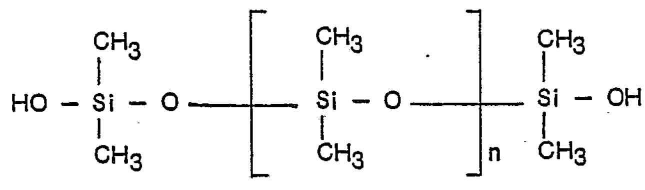

n = 10 bis 5000

Neben Methylgruppen können bis 30 Mol-% Ethyl-, Vinyl- und Phenylgruppen in den Organopolysiloxankomponenten enthalten sein, bevorzugt werden aber methylsubstituierte Organopolysiloxane eingesetzt.

Die für die Copfropfpolymerisation eingesetzten aliphatischen oder gemischt aliphatisch-aromatischen Polyester werden in an und für sich bekannter Weise durch Veresterungs- oder Umesterungsreaktion von Gemischen aus aliphatischen oder aromatischen Dicarbonsäuren, ihren Anhydriden oder Estern und aliphatischen Dialkoholen hergestellt (vergl. Ullmanns Enzyklopädie der technischen Chemie, 14. Band; Urban u. Schwarzenberg, München, 1963, S. 80 ff).

Als Dicarbonsäuren werden vorzugsweise eingesetzt Adipinsäure, Sebacinsäure, Terephthalsäure, Phthalsäure, Isophthalsäure, Maleinsäure, Fumarsäure, Itaconsäure; als mehrwertige Alkohole werden vorzugsweise eingesetzt Ethylenglykol, Propandiol-1,2 und -1,3, Butandiol-1,3 und -1,4, Hexandiol-1,6, 2,2-Dimethylpropandiol-1,3 und Polyethylen- und Polypropylenglykole oder mehrwertige aliphatische Alkohole, die 2—7 Etheratome im Molekül enthalten, vergl. DAS 10 54 620.

Für verzweigtkettige Polyester werden höherfunktionelle Carbonsäuren oder Alkohole eingesetzt, erwähnt seien Glycerin, 1,1,1-Trimethylolpropan, Hexantriol und Pentaerythrit (vergl. z.B. DE—PS 1 105 160 und DE—AS 1 029 147). Die Molekulargewichte der Polyester liegen zwischen 800 bis 10 000, die OH-Zahlen zwischen 0,1 und 100, die Säurezahlen zwischen 0,1 und 80. Die Restwassergehalte der Polyester liegen im allgemeinen unter 0,1%. Falls gewünscht, können auch spezielle Polyester mit z.B. enger Molekulargewichtsverteilung eingesetzt werden, die durch Polymerisation von Lactonen, wie z.B. β-Propiolacton, γ-Butyrolacton oder ε-Caprolacton erhalten werden, oder deren Synthese durch Copolymerisation von Epoxiden mit cyclischen Anhydriden erfolgte, vergl. K. Hamann, Makrom. Chem. 51 (1962) 53 und R. F. Fischer, J. Poly. Sci. 44 (1960) 155.

Die Polyester können alleine, in Mischung mit anderen Polyestern oder gegebenenfalls auch Polyethern eingesetzt werden.

Auch die erfindungsgemäß in Frage kommenden, mindestens eine, in der Regel zwei bis acht, vorzugsweise zwei bis drei Hydroxylgruppen im Molekül aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole oder Amin, z.B. Ethylenglykol Propylenglykol-(1,3) oder -(1,2), Trimethylolpropan, 4,4'-Dihydroxyglykol-(1,3) oder -(1,2), Trimethylolpropan, 4,4'-Dihydroxydiphenylpropan, Anilin, Ammoniak, Ethanolamin, Ethylendiamin hergestellt. Auch Sucrosepolyether, wie sie z.B. in den deutschen Auslegeschriften 1 176 358 und 1 064 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z.B. durch Polymerisation von Styrol, Acrylnitril in Gegenwart von Polyethern entstehen (amerikanische Patentschriften 3 383 351,

---

*) gegebenenfalls im Gemisch mit einem Polyether, der ebenfalls acyliert sein kann

3 304 273, 3 523 093, 3 110 695, deutsche Patentschrift 1 152 536), sind ebenfalls geeignet, ebenso OH-Gruppen aufweisende Polybutadiene.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischether, Polythioetherester, Polythioetheresteramide.

Die eingesetzten aliphatischen oder gemischt aliphatisch-aromatischen Polyester und Polyether können gegebenenfalls acyliert vorliegen. Die Acylierung der freien OH-Funktionen des Polyesters und Polyethers kann in bekannter Weise mit Carbonsäureanhydriden, Carbonsäurehalogeniden oder durch eine Nachkondensation mit überschüssiger oder stöchiometrischer Menge Mono- oder Dicarbonsäure erfolgen. In besonders einfacher Weise kann die Acylierung mit Acetanhydrid durchgeführt werden. Die Acylierung kann vor, während oder nach der Pfropfpolymerisation erfolgen. Erfolgt die Acylierung vor der Pfropfreaktion, kann so verfahren werden, daß der Polyester und Polyether mit einer bestimmten Menge Acetanhydrid umgesetzt wird. Die Acylierung erfolgt bei erhöhten Temperaturen (100—180°C) sehr rasch, falls gewünscht, können anschließend die gebildete Essigsäure und nicht umgesetztes Acetanhydrid abgezogen werden, die Entfernung dieser Komponenten ist aber nicht nötig, auch das rohe Acylierungsprodukt kann problemlos für die Pfropfreaktion verwendet werden. Die Acylierung läßt sich ohne Nachteile für den weiteren Reaktionsablauf auch während der Polymerisation der Vinylverbindungen durchführen, die Reaktion wird dadurch nicht gestört. Ferner ist es selbstverständlich möglich, die gebildete Pfropfdispersion auch erst nach der abgeschlossenen Vinylpolymerisation mit dem Acylierungsagenz umzusetzen.

Als Vinylmonomere seien beispielhaft aufgeführt: Olefine wie Ethylen, Propylen, Isobutylen, Vinylester aliphatischer oder aromatischer Carbonsäuren, vorzugsweise Vinylacetate, Vinylpropionat, α,β-ungesättigte Mono- oder Dicarbonsäuren und ihre Derivate, erwähnt seien (Meth)acrylsäure, Methyl(meth)acrylat, Ethyl(meth)acrylat, Propyl- bzw. isopropyl(meth)acrylat, n-Butyl-, iso- oder tert.-Butyl(meth)acrylat, 2-Ethylhexyl(meth)acrylat, (Meth)-Acrylamid, N-Alkyl-substituierte (Meth)acrylamidderivate, (Meth)Acrylnitril, Maleinsäureanhydrid, Maleinsäureamid, N-Alkyl-Maleinimide, Maleinsäure-halb- oder -diester, Vinylaromaten wie Styrol, α-Methylstyrol, 4-Chlorstyrol, Vinylchlorid, Vinylidenchlorid, Vinylidenfluorid, Tetrafluorethylen, Vinylether wie Ethylvinylether oder n-Butylvinylether; aus der Reihe der Allylverbindungen seien angeführt Allylalkohol, Allylacetate, 2-Methylenpropan-1,3-dioldiazetat, 2-Methylenpropandiol-1,3, Allylethylcarbonat, Allylphenylcarbonat. Falls die Vernetzung oder Erhöhung der Molekulargewichte der Vinylharzphase gewünscht wird, können mehrfach ungesättigte Vinylverbindungen oder Allylverbindungen eingesetzt werden. Erwähnt seien Divinylbenzol, (Meth)Acrylsäureester mehrwertiger Alkohole wie z.B. Ethylenglykoldimethacrylat, Diethylenglykoldiacrylat und Divinylether.

Die radikalische Polymerisation der Vinylmonomeren kann in an und für sich bekannter Weise mit Hilfe von Radikalbildnern, UV-Strahlen, $\alpha$-,$\beta$- oder $\gamma$-Strahlen oder thermisch ohne weitere Zusätze gestartet werden. Die strahlungsinitiierte Polymerisation wird vorzugsweise in Gegenwart von Sensibilisatoren durchgeführt, vergl. z.B. A. D. Jenkins, A. Ledwith, Reactivity, Mechanism and Structure in Polymer Chemistry, John Wiley & Son, London, New York, 1974, S. 465.

Um die radikalische Polymerisation der Vinylmonomeren zu starten, werden Radikalbildner in Mengen zwischen 0,001 bis 2, vorzugsweise 0,02 bis 0,8 Gew.-%, bezogen auf die Gesamtmischung aus Organopolysiloxan, Polyester und Vinylmonomere eingesetzt, Als Radikalbildner seien beispielhaft aufgeführt Azo-Initiatoren wie Azo-bis-iso-buttersäurenitril (AIBN), Azoester, Azo-Iminoester oder Azo-N-Alkylamide, Peroxide wie di-tert. Butylperoxid, Di-cumylperoxid, Di-Benzoylperoxid, Perester wie Amylperpivalet, tert. Butylperpivalat, tert.- Butylperoctoat, t-Butylperbenzoat, tert. Butylperneodecanoat, Percarbonate wie Cyclohexylpercarbonat oder Bisisopropylpercabonat oder Hydroxyperoxide wie z.B. Cumylhydroperoxid, tert. Butylhydroperoxid.

Geeignete Initiatoren sind ferner Benzpinakol, Benzpinakolderivate oder andere thermisch labile hochsubstituierte Ethanderivate.

Die Polymerisation kann ferner mit Hilfe von Redoxsystemen bei tieferen Temperaturen als den rein thermischen Zerfallstemperaturen der Radikalbildner gestartet werden.

Als Redox-Initiatoren seien beispielhaft erwähnt Kombinationen aus Peroxiden und Aminen, wie z.B. Benzoylperoxid und Triethylamin, Trialkylborverbindungen und Sauerstoff, Hydroperoxide und Sulfinsäuren, Formaldehyd oder Aldosen oder Kombinationen mit niederwertigen Übergangsmetallsalzen oder Peroxid/$SO_2$-Systeme.

Die Polymerisationsreaktion kann kontinuierlich oder diskontinuierlich, drucklos oder bei Reaktionsdrucken bis z.B. 300 bar, vorzugsweise bis 15 bar, bei Reaktionstemperaturen zwischen −20°C und +250°C, vorzugsweise 70 bis 190°C, durchgeführt werden. Falls gewünscht, kann die Polymerisation auch in Gegenwart von Lösungsmitteln oder Verdünnungsmitteln durchgeführt werden, genannt seien Wasser, Alkohole, wie Methanol, Ethanol, tert. Butanol, aliphatische oder aromatische Kohlenwasserstoffe, Halogenkohlenwasserstoffe wie Chlorbenzol oder fluorierte Verbindungen, Ether wie Dioxan oder Tetrahydrofuran, Ester wie z.B. Essigsäureethylester.

Vorzugsweise wird die Polymerisation aber lösungsmittelfrei durchgeführt.

Falls gewünscht, kann die Polymerisationsreaktion in Gegenwart von Molekulargewichtsreglern durchgeführt werden. Als Regler seien aufgeführt Mercaptane wie n- oder tert.-Dodecylmercaptan, Thioglykol, Thioglycerin oder Thioessigsäureester. Ferner schwefelfreie Molekulargewichtsregler wie

Kohlenwasserstoffe, beispielhaft seien genannt Paraffinfraktionen wie z.B. Petrolether, Leicht- oder Waschbenzin, α-Olefine wie z.B. Propylen, Isobutylen, Buten-1, ferner Ketone wie z.B. Aceton, Methylethylketon oder Cyclohexanon, ferner Aldehyde wie z.B. Formaldehyd, Acetaldehyd, Propionaldehyd, Isobutyraldehyd oder Allylverbindungen wie z.B. Allylalkohol, Allylacetat, 2-Methylenpropan-1,3-diol diazetat oder Allylcarbonate. Als Telegene kommen ferner in Frage Halogenkohlenwasserstoff wie Methylenchlorid, Tetrachlorethan, Dibromethan usw. Wie zu erwarten, lassen sich mit Hilfe derartiger Regler die Viskositäten der Dispersionen steuern.

Die Umsetzung der eingesetzten Monomeren wird vom gewählten Polymerisationsverfahren und den Reaktionsbedingungen bestimmt. Bei der diskontinuierlichen Polymerisationsweise werden möglichst hohe Umsätze angestrebt, so daß mindestens 80% der einegesetzten Monomeren, vorzugsweise aber mehr als 90% umgesetzt werden. Die Entfernung der Restmonomeren erfolgt nach bekannten Verfahren destillativ bei Normaldruck oder unter vermindertem Druck. Die nach der Aufarbeitung in den Dispersionen noch effektiv gefundenen Restmonomergehalte sind vernachlässigbar gering, sie liegen im allgemeinen unter 1000 ppm, vorzugsweise unter 100 ppm.

Falls gewünscht, können nach beendeter Polymerisation in den Ansatz Antioxidantien, Stabilisatoren, UV-Absorber, Alterungsschutzmittel, Weichmacher, fungistatisch und bakteriostatisch wirkende Substanzen eingetragen werden.

Ferner können die üblicherweise bei der Herstellung von Silikon-Elastomeren verwendeten Füllstoffe eingesetzt werden. Derartige Füllstoffe sind Kieselsäuren, die nach verschiedenen Verfahren hergestellt wurden und unterschiedliche spezifische Oberflächen aufweisen.

Die erfindungsgemäß erhaltenen Silicon-Polyester-Vinylpolymerisat-Dispersionen sind besonders für die Verwendung in bei Raumtemperatur härtenden 1- und 2-Komponentenmassen geeignet. Solche Massen, die nach dem Kondensationsprinzip aushärten, bestehen bekanntlich aus hydroxylendblockierten Polydiorganosiloxanen, Vernetzern, Füllstoffen und Katalysatoren.

Die hydroxylendblockierten Polydiorganosiloxane in derartigen Massen können ganz oder teilweise durch die erfindungsgemäßen Copfropfpolymerisat-Dispersionen ersetzt werden. Als Vernetzer werder Silane mit mindestens 3 hydrolytisch leicht abspaltbaren Resten im Molekül, wie der Carbonsäurerest, Carbonsäureamidrest, oximrest, Aminoxidrest und Aminrest eingesetzt. Verstärkende Füllstoffe sind z.B. pyrogen erzeugtes Siliciumdioxid, als nicht verstärkender Füllstoff kommt z.B. Kreide zum Einsatz. Als Katalysatoren verwendet man u.a. organische Zinnverbindungen wie Dibutylzinndilaurat. Siliconmassen, in denen die erfindungsgemäßen Copfropfpolymerisat-Dispersionen verwendet werden, zeigen im Vergleich mit den bisher bekannten Siliconmassen eine deutlich verbesserte Überstreichbarkeit mit handelsüblichen Lacken, z.B. auf Alkydharz- oder Polyurethanbasis.

Die folgenden Beispiele erläutern die Herstellung der erfindungsgemäßen Silicon-Polyester-Vinylmonomerdispersionen. Wenn nichts anders vermerkt, sind Mengenangeben, als Gewichtsteile bzw. Gewichtsprozente zu verstehen.

Die vorliegende Erfindung soll anhand der folgenden Beispiele näher erläutert werden.

Herstellung der Ausgangssubstanzen:

Die Herstellung der OH-funktionellen Polysiloxane geschieht in der literaturbekannten Verfahrensweise, vergl. W. Noll, Chemie und Technologie der Silicone, Verlag Chemie GmbH, Weinheim/Bergstr., 2. Auflage, 1968, Kap. 5, S. 162 ff.

Die in den Beispielen aufgeführten OH-funktionellen Polydimethylsiloxane sind wie folgt gekennzeichnet:

| OH-Polysiloxan-Nr. | Viskosität/mPas/bei 20°C |
|---|---|
| 1 | 5 000 |
| 2 | 10 000 |
| 3 | 18 000 |
| 4 | 50 000 |

Die Herstellung der Polyester erfolgt durch Schmelzkondensation unter Abdestillation des gebildeten Reaktionswassers bis zum Erreichen der gewünschten OH- bzw. Säurezahlen, vergl. Houben-Weyl, Methoden der Organischen Chemie, Bd. XIV/2, Georg Thieme-Verlag, Stuttgart, 1963, S. 1 ff. In der Tabelle 1 sind die wichtigsten Kenndaten der verwendeten Polyester zusammengefaßt:

TABELLE 1

| Bezeichnung des Polyesters | Zusammensetzung des Polyesters | OH-Zahl | Säure-Zahl |
|---|---|---|---|
| A | Adipinsäure-Diethylenglykol | 40 | 1 |
| B | Adipinsäure, Ethylenglykol, Butandiol-1,4 | 55 | 1 |
| C | Phthalsäure, Isophthalsäure, Ethylenglykol, Neopentylglykol | 120 | 18 |
| D | wie B | 19,5 | 1 |
| E | Phthalsäure, Maleinsäure, Propandiol-1,2 Dipropylenglykol | 34 | 20 |
| F* | Adipinsäure, Diethylenglykol, Essigsäure | 1 | 1 |

* Polyester F wird durch Umsetzung von Polyester A mit der stöchiometrischen Menge Acetanhydrid bei 130°C und 3 Stunden Reaktionszeit und anschließender Abdestillation flüchtiger Anteile im Vakuum bei 130—150°C hergestellt.

Der für die Pfropfreaktion im Gemisch mit Polyestern eingesetzte Polyether G ist ein trifunktioneller Misch-Polyether aus Ethylenoxid und Propylenoxid. Die OH-Zahl beträgt 49, die Viskosität bei 20°C 520 [m Pas].

Beispiel 1

In einem 100 1-Autoklaven werden 14 390 g Polyester A, 23 480 g Polysiloxan 1 vorgelegt. Der Autoklav wird evakuiert und mit Stickstoff ausgeglichen. Nach dem Aufheizen auf 120°C werden 2 Lösungen innerhalb von 3 Std. gleichzeitig hinzugepumpt:

Lös. 1:
5 000 g Polysiloxan 1
4 707 g Vinylacetat
37,5 g tert. Butylperpivalat

Lös. 2:
9 683 g Vinylacetat.

Nach Zugabe von Lös. 1 und 2 wird noch 1 Std. bei 120°C nachgerührt. Durch gaschromatografische Analyse wird ein Monomerumsatz von 82,4% bestimmt. Die flüchtigen Anteile werden aus dem Ansatz durch Destillation im Vakuum bei 1 Torr bei einer Sumpftemperatur von 120—125°C entfernt. Nach 3-stündiger Destillation unter Rühren werden im Pfropfansatz durch gaschromatografische Analyse 24 ppm Vinylacetat nachgewiesen. Die Restmonomerentfernung ist damit abgeschlossen. Der Ansatz weist bei 25°C eine Viskosität von 40 000 mPas auf. Die Zusammensetzung der Copfropfdispersion:

52,3% Polysiloxan 1
26,15% Polyester A
21,55% polymerisierte Einheiten aus Vinylacetat

Beispiel 2

In einem 100 1-Reaktor werden 4428 g Polyester A und 34036 g Polysiloxan 1 vorgelegt. Man evakuiert und gleicht mit Stickstoff aus. Nach Erwärmen der Vorlage auf 120°C wird eine Lösung von 12840 g Polyester A, 17268 g Vinylacetat und 36,5 g tert. Butylperpivalat innerhalb von 3 Std. in den Reaktor eingetragen. Die Innentemperatur wird konstant bei 120°C gehalten. Nach abgeschlossener Zugabe der Lösung wird eine Lösung von 10,5 g tert. Butylperpivalat in 100 g Polysiloxan 1 schnell hinzugegeben. Man hält den Ansatz noch 1 Std. bei 120°C (Monomerumsatz zu diesem Zeitpunkt 93%). Anschließend werden die flüchtigen Anteile über eine Destillationsbrücke bei 1 Torr und 120°C Sumpftemperatur abgezogen. Nach 2 Stunden ist die Destillation beendet (gaschromatografisch sind noch 81 ppm Vinylacetat

nachzuweisen). Die Copfropfdispersion weist eine Viskosität von 46 000 mPas auf und besitzt folgende Zusammensetzung:

50,51 Gew.-% Polysiloxan 1
25,25 Gew.-% Polyester A
24,24 Gew.-% polymerisierte Einheiten aus Vinylacetat.

Beispiel 3-5

In einem 40 l-Autoklav werden die unter "Vorlage" aufgeführten Komponenten eingefüllt. Dann wird evakuiert und mit Stickstoff gespült. Man erwärmt auf 110°C und gibt die Lösung innerhalb von 3 Std. hinzu.

Anschließend wird 2 Std. bei 110°C nachgerührt. Die Aufarbeitung der Copfropfpolymerisatdispersionen erfolgt über einen Schlangenrohrverdampfer von 2 l Volumen. Als Treibgase werden wahlweise Stickstoff, Wasserdampf oder Wasserdampf-Stickstoffgemische eingesetzt. Der Produkteintrag in den Schlangenrohrverdampfer (10 kg/h) erfolgt mittels einer Zahnradpumpe. Bei einer Außentemperatur von 190—200°C wird eine maximale Produkttemperatur von 150—155°C im Produktaustrag erreicht. Die flüchtigen Anteile werden über Kühlung mit Wasser abgeschieden. Die Restmonomergehalte werden gaschromatografisch bestimmt.

| Beispiel-Nr. | Vorlage | | | | Lösung | | | | | |
|---|---|---|---|---|---|---|---|---|---|---|
| | Polyester | | Polysiloxan | | Vinylacetat | Polyester | | Polyester | | tert.Butyl-perpivalat |
| | A | B | 1 | 2 | | A | B | 1 | 2 | |
| 3 | – | 3250 | – | 6500 | 6500 | – | 3250 | – | 6500 | 15 |
| 4 | 3250 | – | 6500 | – | 6500 | 3250 | – | 6500 | – | 15 |
| 5 | 3250 | – | – | 6500 | 6500 | 3250 | – | – | 6500 | 15 |

| Beispiel-Nr. | Zusammensetzung | | | | |
|---|---|---|---|---|---|
| | Restvinyl-acetatgehalt | Viskosität mPas | Polyester | Polysiloxan | Polyvinyl-acetat |
| 3 | 31 ppm | 50 000 | 25,22 | 50,44 | 23,34 |
| 4 | 55 ppm | 47 000 | 25,35 | 50,70 | 23,95 |
| 5 | 23 ppm | 60 000 | 25,3 | 50,6 | 23,10 |

Beispiel 6

In einem 40 1-Autoklaven werden 9200 g Polysiloxan 2, 6500 g Polyester A und 2600 g eines Polydimethylsiloxans mit einem Molekulargewicht von etwa 25 000 vorgelegt. Man evakuiert und gleicht mit Stickstoff aus. Der Ansatz wird auf 120°C erwärmt. Dann werden innerhalb von 3 Std. folgende Lösungen hinzugegeben: Lösung 1: 6500 g Vinylacetat; Lösung 2: 1200 g Polysiloxan 2, 15 g tert. Butylperpivalat. Die Innentemperatur wird auf 120°C gehalten. Nach beendeter Zugabe der Lösungen wird noch 1 Std. bei 120°C nachgerührt. Der Autoklav wird evakuiert und bei einem Vakuum von 10 Torr die flüchtigen Anteile über eine Destillationsbrücke abgezogen. Man erhält nach dem Abkühlen eine feinteilige, homogene Dispersion mit einer Viskosität von 35 000 mPas bei 25°C und der folgenden Zusammensetzung: 51,6% Polysiloxan, 25,8% Polyester, 22,6% polymerisierte Einheiten aus Vinylacetat.

Beispiel 7—8

In einem 6 l-Rührkessel wird die Vorlage eingefüllt. Unter Stickstoff wird auf die angegebene Temperatur erwärmt. Dann wird die Lösung innerhalb von 2 Std. hinzugegeben.

Nach beendeter Zugabe wird der Ansatz 1 Std. nachgerührt. Die flüchtigen Anteile werden über eine Destillationsbrücke bei 20 Torr und 120°C Sumpftemperatur abgezogen.

| Beispiel-Nr. | Vorlage | | | Lösung | | | | |
|---|---|---|---|---|---|---|---|---|
| | Polyester B | Polysiloxan 1 | Temperatur °C | Polyester B | Polysiloxan 1 | Vinylacetat | tert. Butyl-perpivalat | tert. Butyl-peroctoat |
| 7 | 500 | 1000 | 120 | 500 | 1000 | 1000 | – | 5,0 |
| 8 | 500 | 1000 | 110 | 500 | 1000 | 1000 | 3,0 | – |

| Beispiel-Nr. | Zusammensetzung | | | |
|---|---|---|---|---|
| | Viskosität mPas | Polyester | Polysiloxan | Polyvinylacetat |
| 7 | 53 000 | 25,2 | 50,2 | 24,6 |
| 8 | 28 000 | 25,3 | 50,8 | 23,9 |

Beispiel 9—10

In einem 2 l-Rührkessel werden 400 g Polyester A vorgelegt. Unter Überleitung von Stickstoff wird die Vorlage auf 150°C erwärmt. Dann wird eine Lösung innerhalb von 2 Std. hinzugegeben und anschließend 1 Std. bei 150°C nachgerührt. Die flüchtigen Anteile werden über einen Labordünnschichter im Vakuum von 1 Torr bei einer Heizmanteltemperatur von 150°C abgezogen. Der Produktauffangbehälter wird geheizt (120°C).

| Beispiel-Nr. | Lösung | | | | |
|---|---|---|---|---|---|
| | Polysiloxan 1 | Styrol | n-Butyl-acrylat | Acryl-nitril | tert.Butyl-peroctoat |
| 9 | 800 | 200 | 150 | 50 | 4,0 |
| 10 | 800 | 150 | 150 | 100 | 4,0 |

| Beispiel-Nr. | Zusammensetzung in Gew.–% | | | | | |
|---|---|---|---|---|---|---|
| | Viskosität mPas | Polyester | Polysiloxan | Styrol | n-Butyl-acrylat | Acrylnitril |
| 9 | 50 000 | 25,8 | 51,6 | 11,3 | 8,4 | 2,9 |
| 10 | 78 000 | 25,8 | 51,5 | 8,5 | 8,5 | 5,7 |

Beispiel 11—12

In einem 2 l-Rührkessel wird die angegebene Menge Polysiloxan vorgelegt. Unter Überleitung von Stickstoff wird auf 150°C erwärmt und die Lösungen innerhalb von 2 Std. hinzugegeben. Nach beendeter Zugabe wird 1 Std. bei 150°C nachgerührt. Die flüchtigen Anteile werden über einen Labordünnschichter im Vakuum von 15 Torr und 150°C Heizmanteltemperatur abgezogen und der Produktaufgangbehälter auf 120°C gehalten.

| Beispiel-Nr. | Vorlage | Lös. 1 | | Lös. 2 | | |
|---|---|---|---|---|---|---|
| | Polysiloxan 1 | Polyester C | Polyester D | Styrol | Polysiloxan 1 | tert. Butyl-peroctoat |
| 11 | 200 | 200 | – | 200 | 200 | 2 |
| 12 | 200 | – | 200 | 200 | 200 | 2 |

| Beispiel-Nr. | Zusammensetzung | | | |
|---|---|---|---|---|
| | Viskosität | Polysiloxan | Polyester | Styrol |
| 11 | 21 000 | 50,0 | 25,1 | 24,9 |
| 12 | 41 000 | 50,9 | 25,5 | 23,6 |

Beispiel 13

In einem 2 l-Rührkessel werden 800 g Polysiloxan 1 vorgelegt und auf 150°C unter Überleitung von Stickstoff erwärmt. Dann werden Lösung 1 und 2 gleichzeitig in 2 Std. hinzugegeben. *Lösung 1:* 800 g Polyester A, 130 g Polyester E, 70 g Styrol, 200 g n-Butylacrylat; *Lösung 2:* 800 g Polysiloxan 1,4 g tert. Butylperoctoat. Nach beendeter Zugabe wird noch 1 Std. bei 150°C nachgerührt. Die flüchtigen Anteile werden an einem Labordünnschichter bei einem Vakuum von 18 Torr und 150°C Heizmanteltemperatur abgezogen. Die fertige Dispersion hat eine Viskosität von 34 000 mPas bei 25°C und weist folgende Zusammensetzung auf:

57,5 g Polysiloxan, 33,5% Polyester, 2,5% Styrol, 6,5% n-Butylacrylat.

Beispiel 14

In einem 6 l-Rührkessel werden 800 g Polysiloxan 2, 400 g eines Polydimethylsiloxans des Molekulargewichtes 25 000, 500 g Polyester A und 500 g des Pfropfprodukts aus Beispiel 4 vorgelegt. Die Vorlage wird auf 110°C erwärmt und unter Stickstoffüberleitung 2 Lösungen gleichzeitig hinzugegeben: *Lösung 1:* 800 g Polysiloxan 2, 2,25 g tert. Butylperpivalat; Lösung 2: 500 g Polyester A und 1000 g Vinylacetat. Die Lösungen sind nach 2 Std. vollständig hinzugegeben. Anschließend wird noch 1 Std. nachgerührt bei 110°C. Die flüchtigen Anteile werden durch Vakuumdestillation (1 Torr, 110°C) entfernt. Der Vinylacetatumatz beträgt 94,4%. Die Dispersion hat bei 20°C eine Viskosität von 34 000 mPas und folgende zusammensetzung: 45,0% Polysiloxan, 11,3% Pfropfprodukt aus Beispiel 4, 22,5% Polyester A und 21,2% Vinylacetat.

Beispiel 15

In einem 40 l-Rührautoklaven werden 6942 g Polyester A und 11 328 g Polysiloxan 1 vorgelegt. Unter Stickstoffüberleitung wird auf 110°C erwärmt. Bei 110°C werden 2 Lösungen gleichzeitig zudosiert. *Lösung 1:* 2557 g Polysiloxan 1, 2271 g Vinylacetat und 22,5 g tert. Butylperpivalat, *Lösung 2:* 9683 g Vinylacetat. Nach beendeter Zugabe wird 1 Std. nachgerührt bei 110°C. Die flüchtigen Anteile werden anschließend durch Vakuumdestillation entfernt. Der Vinylacetatumsatz beträgt 91,6%. Die Zusammensetzung der Copfropfdispersion: 43,7% Polysiloxan, 34,5 Vinylacetat, 21,8% Polyester A.

Die Viskosität bei 25°C beträgt 62 000 mPas.

Beispiel 16—19

In einem 2 l-Rührkessel werden 350 g Polysiloxan 1 und 200 g Polyester A vorgelegt. Unter Stickstoffüberleitung wird auf die angegebene Temperatur erwärmt. Dann wird die Lösung innerhalb von 2 Std. hinzugegeben und 1 Std. nachgerührt. Die flüchtigen Anteile werden im Vakuum bei 130°C und 15 Torr abdestilliert.

| Beispiel-Nr. | Lösung | | | | |
|---|---|---|---|---|---|
| | Vinylacetat | n-Butyl-acrylat | Acrylnitril | Polysiloxan 1 | tert.-Butyl-perpivalat |
| 16 | – | 200 | – | 100 | 1,5 |
| 17 | – | 150 | 50 | 100 | 1,5 |
| 18 | 80 | 80 | 40 | 100 | 1,5 |
| 19 | 100 | 100 | – | 100 | 1,5 |

| Beispiel-Nr. | Zusammensetzung | | | | | |
|---|---|---|---|---|---|---|
| | Viskosität mPas | Polysiloxan | Polyester | Vinyl-acetat | Acryl-nitril | n-Butyl-acrylat |
| 16 | 35 900 | 53,1 | 23,7 | – | – | 23,2 |
| 17 | 40 000 | 55,0 | 24,4 | – | 4,5 | 16,1 |
| 18 | 37 200 | 57,8 | 25.7 | 5,8 | 2,4 | 8,3 |
| 19 | 47 700 | 55 | 24,5 | 9,5 | – | 11 |

Beispiel 20

1000 g Polyester A, 1600 g Polysiloxan 1 und 52 g Acetanhydrid werden unter Stickstoff auf 120°C erwärmt. Eine Lösung aus 1000 g Vinylacetat, 400 g Polysiloxan 1 und 4,5 g tert.-Butylperpivalat wird innerhalb von 3 Stunden unter Rühren hinzugegeben. Nach 1-stündigem Nachrühren bei 120°C werden die flüchtigen Anteile im Vakuum bei 120°C abgezogen. Die Dispersion hat eine Viskosität von 44 000 cP und folgende Zusammensetzung: 50,6% Polysiloxan, 25,3% acetylierter Polyester und 24,1% polymerisierte Einheiten aus Vinylacetat.

Beispiel 21

1000 g Polyester A, der im Vakuum 2 Stunden bei 120°C entwässert wurde, und 16000 g Polysiloxan 1 werden unter Stickstoff auf 110°C erwärmt. Dann wird eine Lösung von 4,5 g tert.-Butylperpivalat in 400 g Polysiloxan 1 und 1000 g Vinylacetat, innerhalb von 2 Stunden unter Rühren hinzugegeben. Danach wird die Lösung von 2,25 g tert.-Butylpivalat in 105 g Acetanhydrid schnell hinzugegeben und 2 Stunden bei 110°C nachgerührt. Flüchtige Anteile werden in Vakuum bei 120°C abgezogen. Die gebildete Dispersion hat eine Viskosität von 45 000 cP und folgende Zusammensetzung: 50,5% Polysiloxan, 25,2% acetylierter Polyester, 24,2% polymerisierte Einheiten aus Vinylacetat. Die OH-Zahl der Copfropfdispersion beträgt 2,5.

Beispiel 22

In einem 6 l-Rührkessel werden unter Stickstoff 1600 g Polysiloxan 1, 1000 g Polyester A und 10 g eines Polyethylenglykolethers vom Molekulargewicht 20 000 (Polywachs 20 000 der Chemischen Werke Hüls) auf 110°C erwärmt. Bei konstanter Reaktionstemperatur von 110°C wird eine Lösung von 6,0 g tert.-Butylperpivalat, 500 g Polysiloxan 1 und 1000 g Vinylacetat innerhalb von 2 Stunden hinzugetropft. Anschließend wird 2 Stunden bei 110°C nachgerührt und die flüchtigen Anteile im Vakuum bei 110°—130°C abgezogen. Man erhält eine Dispersion mit der Viskosität 52 000 mPas und der Zusammensetzung: 50,9% Polysiloxan, 24,3% Polyester, 2,4% Polyether und 22,4% polymerisierte Einheiten aus Vinylacetat.

Beispiel 23

1600 g Polysiloxan 1, 500 g Polyester A und 500 g Polyether G werden unter Stickstoff auf 110°C erwärmt und eine Lösung von 4,5 g tert.-Butylperpivalat, 400 g Polysiloxan 1 und 1000 g Vinylacetat innerhalb von 2 Stunden hinzugegeben. Anschließend wird 2 Stunden bei 110°C nachgerührt. Die flüchtigen Anteile werden im Vakuum bei 110—120°C abgezogen. Man erhält eine Dispersion mit einer Viskosität von 40 000 mPas und der folgenden Zusammensetzung: 51,0% Polysiloxan, 12,7% Polyester, 12,7% Polyether und 23,6% polymerisierte Einheiten aus Vinylacetat.

Beispiel 24—27

Allgemeine Arbeitsvorschrift

In einem 6 l-Rührkessel wird die Vorlage auf 110°C unter Schutzgas erwärmt. Eine Lösung wird innerhalb von 2 Stunden hinzugegeben und anschließend 1 Stunde bei 110°C nachgerührt. Die Restmonomeren werden im Vakuum bei 110°C—120°C entfernt.

| Beispiel-Nr. | Vorlage | | | | Lösung | | | |
|---|---|---|---|---|---|---|---|---|
| | Polysiloxan 1 | Polyester A | Polyester B | Polyester D | Polyether A | Polysiloxan 1 | Vinyl-acetat | tert.-Butyl-perpivalat |
| 24 | 1600 | – | 500 | – | 500 | 400 | 1000 | 4,5 |
| 25 | 1600 | – | – | 800 | 200 | 400 | 1000 | 4,5 |
| 26 | 1600 | 800 | – | – | 200 | 400 | 1000 | 4,5 |
| 27 | 1600 | – | 800 | – | 200 | 400 | 1000 | 4,5 |

| Beispiel-Nr. | Viskosität mPas | Zusammensetzung in Gew.-% | | | |
|---|---|---|---|---|---|
| | | Polysiloxan | Polyester | Polyether | Polymerisierte Einheiten aus Vinyl-acetat |
| 24 | 52 000 | 51,3 | 12,8 | 12,8 | 23,1 |
| 25 | 52 000 | 51,0 | 20,4 | 5,1 | 23,5 |
| 26 | 50 000 | 50,8 | 20,3 | 5,0 | 23,9 |
| 27 | 48 000 | 51,4 | 20,6 | 5,2 | 22,8 |

Beispiel 28

In einem 6 l-Rührkessel werden 1600 g Polysiloxan 1, 200 g Polyether G und 800 g Polyester A auf 110°C erwärmt. Dann wird eine Lösung von 4,5 g tert. Butylperpivalat in 400 g Polysiloxan 1 und 1000 g Vinylacetat innerhalb von 2 Std. hinzugegeben. Danach wird eine Lösung von 3,0 gtert. Butylperpivalat in 90 g Acetanhydrid innerhalb von 5 Min. eingetropf. Danach wird 2 Std. bei 110°C nachgerührt.

Die flüchtigen Anteile werden im Vakuum bei 110—120°C abgezogen. Die Pfropfdispersion hat eine Viskosität von 60000 mPas und eine OH-Zahl von 5. Die Zusammensetzung ist: 24,0% polymerisierte Einheiten aus Vinylacetat, 5,1% Polyether, acetyliert und 20,3 Polyester, acetyliert und 50,6% Polysiloxan.

Beispiel 29

In einem 6 l-Rührkessel werden 1000 g Polyester F, 1600 g Polysiloxan 1 unter Stickstoff auf 110°C erwärmt. Eine Lösung von 1000 g Vinylacetat, 400 g Polysiloxan 1 und 4,5 g tert. Butylperpivalat wird innerhalb von 2 Std. hinzugegeben. Anschließend wird 1 Std. nachgerührt. Die flüchtigen Anteile werden im Vakuum bei 110—120°C abgezogen. Die erhaltene Pfropfdispersion hat eine Viskosität von 35000 mPas und folgende Zusammensetzung: 50,7 Gew.-% Polysiloxan, 25,3 Gew.-% Polyester C und 24,0 Gew.-% polymerisierte Einheiten aus Vinylacetat.

Die nach den hier beschriebenen Verfahren hergestellten Massen wurden mit Hilfe von Vernetzern und die Vernetzung fördernden Katalysatoren nach folgender Rezeptur abgemischt und unter dem Einfluß von Luftfeuchtigkeit ausgehärtet:

200 g Copfropfpolymerisat

10,4 g eines Titankomplexes der folgenden ungefähren Zusammensetzung:

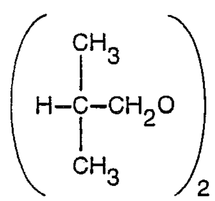

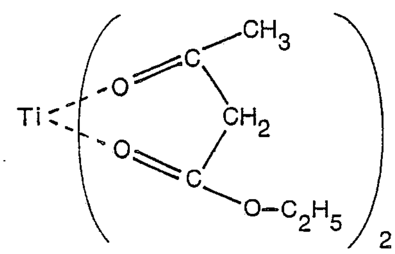

11,4 g Bis-(N-methylbenzamido)-ethoxymethylsilan

2,2 g Dibutylzinndiacetat

Die vernetzten Produkte sind elastisch und klebfrei. Sie wurden mit einem Alkydal-Lack angestrichen, dessen Haftung auf dem Silicon nach 7 Tagen mit Hilfe des Gitterschnitttests ermittelt wurde, indem man auf der bemalten Oberfläche ein Quadrat von 2,54 cm mit einer Rasierklinge in 100 gleich große quadratische Stücke zerschneidet, so daß man eine bemalte Oberfläche mit gitterförmigem Aussehen erhält. Auf dieses Gitter wird dann ein Klebstreifen (Tesafilm Nr. 101 der Fa. Beiersdorf AG, Hamburg) fest aufgepreßt. Der Klebstreifen wird hierauf entfernt, indem man ihn unter einem Winkel von etwa 30° langsam abzieht. Der prozentuale Wert für die Retention des Lacks ergibt sich aus der Anzahl der bemalten quadratischen Stücke, die nach dem Entfernen des Klebstreifens auf der gehärteten Zubereitung verblieben. Die physikalischen Eigenschaften sowie die Ergebnisse des Gitterschnittests gehen aus der folgenden Tabelle hervor. Für die Vergleichsbeispiele 31 und 32 wurden hydroxylendblockierte Polydimethylsiloxane mit einer Viskosität von 5 Pa.s im Beispiel 31 und 50 Pa.s im Beispiel 32 anstelle der Copfropfpolymerisate verwendet.

| Beispiel Nr. | Lackverlauf | Lackhaftung (%) | E-Modul (100% Dehnung) ($N/mm^2$) | Reißfestig- ($N/mm^2$) | Bruchdehnung (%) |
|---|---|---|---|---|---|
| 1 | gut | 89 | 0,236 | 0,379 | 272 |
| 2 | gut | 68 | 0,245 | 0,363 | 239 |
| 3 | gut | 83 | 0,201 | 0,337 | 300 |
| 4 | gut | 86 | 0,206 | 0,361 | 315 |
| 6 | gut | 75 | 0,216 | 0,333 | 262 |
| 8 | gut | 99 | 0,224 | 0,384 | 316 |
| 9 | gut | 86 | 0,707 | 1,304 | 340 |
| 10 | gut | 93 | 0,484 | 1,312 | 419 |
| 11 | gut | 100 | 0,385 | 1,220 | 410 |
| 12 | gut | 89 | 0,378 | 1,000 | 344 |
| 13 | gut | 86 | 0,242 | 0,367 | 289 |
| 14 | gut | 82 | 0,180 | 0,442 | 475 |
| 15 | gut | 91 | 0,199 | 0,525 | 415 |
| 16 | gut | 82 | 0,118 | 0,306 | 351 |
| 17 | gut | 95 | 0,163 | 0,458 | 461 |
| 18 | gut | 98 | 0,178 | 0,576 | 509 |
| 19 | gut | 95 | 0,137 | 0,431 | 445 |
| 20 | gut | 100 | 0,171 | 0,510 | 450 |
| 21 | gut | | 0,199 | 0,319 | 280 |
| 22 | gut | 97 | | | |
| 23 | gut | | 0,114 | 0,342 | 396 |
| 24 | gut | | 0,089 | 0,400 | 774 |
| 25 | gut | | 0,138 | 0,353 | 353 |
| 26 | gut | | 0,148 | 0,414 | 464 |
| 27 | gut | | 0,127 | 0,309 | 388 |
| 28 | gut | | 0,107 | 0,384 | 509 |
| 29 | gut | 95 | 0,106 | 0,314 | 568 |
| 31 | schlecht | 0 | 0,141 | 0,299 | 295 |
| 32 | schlecht | 18 | 0,097 | 0,313 | 544 |

Die Copfropfpolymerisate können ebenso wie hydroxylendblockierte Polydiorganosiloxane in dem Fachmann geläufiger Weise mit Füllstoffen und Weichmachern versetzt werden. Einige Copfropfpolymerisate wurden nach folgender Rezeptur abgemischt.

45,2 teile Copfropfpolymerisat
20 teile Methyl-endgestopptes Polydimethylsiloxan mit einer Viskosität von 1 Pa.s
4,5 Teile Aerosil R 972 der Fa. Degussa
20 Teile Kreide Omya.

Elastomere, die man aus diesen gefüllten Massen erhält, haben folgende mechanische Eigenschaften:

| Beispiel | E-Modul (100%) $N/mm^2$ | Reißfestigkeit $N/mm^2$ | Bruchdehnung % |
|---|---|---|---|
| 3 | 0,17 | 0,41 | 490 |
| 4 | 0,19 | 0,38 | 325 |
| 5 | 0,19 | 0,39 | 410 |
| 7 | 0,17 | 0,38 | 420 |
| 8 | 0,17 | 0,38 | 390 |
| 32 | 0,14 | 0,70 | 550 |

**Patentansprüche**

1. Bei Raumtemperatur härtbare, stabile Copfropfpolymerisatdispersionen, erhältlich durch Pfropfpolymerisation von Vinylmonomeren in Gegenwart von Mischungen aus Erst- und Zweitpolymeren, wobei als Erstpolymer OH-funktionelle Diorganopolysiloxane der Formel

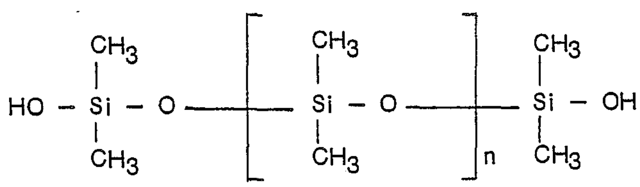

n = 10 bis 5000

und wobei die Methylgruppen bis zu 30 Mol.-% durch Ethyl-, Vinyl- oder Phenylgruppen ersetzt sein können und als Zweitpolymere aliphatische oder gemischt aliphatisch-aromatische Polyester mit einem Molekulargewicht von etwa 800 bis 10 000, einer OH-Zahl zwischen 0,1 und 100 und mit einer Säurezahl von 0,1 bis 80, gegebenenfalls im Gemisch mit gegebenenfalls durch Vinylpolymerisate modifizierten, aliphatischen Polyethern oder Polythioethern mit 1—8 OH-Gruppen pro Molekül, wobei sowohl der Polyester als auch der Polyether, vor, während oder nach der Polymerisation acyliert werden können, eingesetzt werden und wobei Copfropfpolymerisatdispersionen erhalten werden, die über Vinylpolymerisatbrücken verknüpfte Pfropfpolymere aus Erst- und Zweitpolymeren enthalten und die aus

I. 10—90 Gew.-% endständig OH-funktionellen Organopolysiloxanen,
II. 5—85 Gew.-%, gegebenenfalls acylierte Polyestern,
III.0—50 Gew.-%, gegebenenfalls acylierten Polyethern und
IV. 5—85% polymerisierten Einheiten aus Vinylverbindungen bestehen und

wobei die Summe der Komponenten I—IV stets 100% beträgt.

2. Copfropfpolymerisatdispersionen nach Anspruch 1, dadurch gekennzeichnet, daß die Komponente IV aus polymerisierten Einheiten aus Vinylestern, α,β-ungesättigten Carbonsäuren, Derivaten α,β-ungesättigter Mono- oder Dicarbonsäuren, Vinylaromaten, α-Olefinen, halogenierten Vinylmonomeren, Vinylether, Allylverbindungen, Divinylverbindungen oder (Meth) Acrylsäureestern mehrwertiger Alkohole oder Gemischen dieser Monomeren besteht.

3. Copfropfpolymerisatdispersionen nach einem der Ansprüche 1 oder 2, dadurch gekennzeichnet, daß die Komponente IV aus

0—85 Gew.-% polymerisierten Einheiten aus Vinylacetat und

5—80 Gew.-% polymerisierten Einheiten aus (Meth)Acrylsäurealkylester mit 1—8 C-Atomen in der Esteralkylkomponente, (Meth)Acrylsäureamid, N-Alkylsubstituierten (Meth)Acrylsäureamiden, (Meth)Acrylnitril sowie ihren Gemischen, jeweils berechnet auf die gesamte Dispersion, besteht.

4. Copfropfpolymerisatdispersionen nach einem der Ansprüche 1 oder 2, dadurch gekennzeichnet, daß die Komponente I.

30—90 Gew.-% und

die Komponente II.

5—65 Gew.-% ausmachen die Komponente III nicht vorhanden ist und die Komponente IV aus

5—65 Gew.-% polymerisierten Einheiten aus

a) 5—90 Gew.-% Styrol

b) 10—95 Gew.-% (meth)Acrylsäurealkylestern mit 1—8 C-Atomen in der Esteralkylkomponente

c) 0—85 Gew.-% (Meth)Acrylnitril, wobei die Summe der Komponente a) — c) stets 100% beträgt, besteht.

5. Copfropfpolymerisatdispersionen nach einem der Ansprüche 1 bis 3, dadurch gekennzeichnet, daß die Komponente I. 30—90 Gew.-% und

die Komponente II. 5—65 Gew.-% ausmachen,

die Komponente III. nicht vorhanden ist und

die Komponente IV. aus 5—65 Gew.-% polymerisierten Einheiten aus Vinylacetat, besteht.

6. Copfropfpolymerisatdispersionen nach einem der Ansprüche 1 bis 3, dadurch gekennzeichnet, daß die Komponente I aus

10—90 Gew.-% endständig OH-funktionellen Organopolysiloxanen und

0—30 Gew.-% Organopolysiloxanen mit Trimethylsilylendgruppen, jeweils auf die gesamte Dispersion gerechnet, besteht, die Komponente II.aus

5—60 Gew.-% aliphatischen oder gemischt aliphatisch-aromatischen Polyestern besteht und die Komponente III. nicht vorhanden ist.

7. Verfahren zur Herstellung von Copfropfpolymerisatdispersionen, gemäß einem der Ansprüche 1 bis 6, dadurch gekennzeichnet, daß Mischungen aus

a) 8—90 Gew.-% endständig OH-funktionellen Organopolysiloxanen,

b) 4,999—85 Gew.-% aliphatischen oder gemischt aliphatisch-aromatischen Polyestern,

c) 0—50 Gew.-% eines Polyethers,

d) 5—85 Gew.-% eines oder mehrerer Vinylmonomeren,

e) 0,001—2 Gew.-% eines oder mehrerer Radikalbildner,

f) 0—5 Gew.-% eines Reglers,

g) 0—5 Gew.-% einer Carbonsäure, eines Carbonsäureanhydrids oder Carbonsäurehalogenids,

wobei die Summe der Komponenten a bis g stets 100% beträgt, bei Temperaturen zwischen −20°C und +250°C einer Polymerisations- und gegebenenfalls Acylierungsreaktion unterzogen werden.

8. Bei Raumtemperatur vernetzbare Organopolysiloxanmassen, die Copfropfpolymerisatdispersionen nach Ansprüchen 1 bis 6 und zusätzlich Vernetzer, Härtungskatalysatoren, Füllstoffe und gegebenenfalls weitere Zuschlagsstoffe enthalten.

9. Verwendung von bei Raumtemperatur vernetzbaren Organopolysiloxanmassen, die Copfropfpolymerisatdispersionen gemäß einem der Ansprüche 1 bis 6 enthalten, als Ein- oder Zweikomponentensysteme für Dichtungsmassen.

**Claims**

1. Co-grafted polymer dispersions which can be cured at room temperature and are obtainable by graft polymerisation of vinyl monomers in the presence of mixtures of first and second polymers, wherein diorganopolysiloxanes with OH functional groups, of the formula

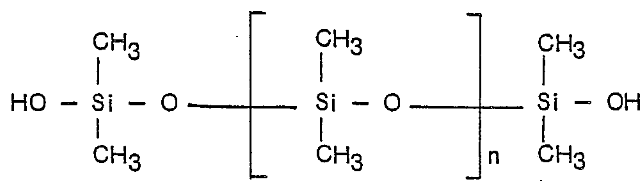

n = 10 bis 5000

are used as the first polymer, it being possible for up to 30 mol% of the methyl groups to be replaced by ethyl, vinyl or phenyl groups, and aliphatic or mixed aliphatic-aromatic polyesters having a molecular weight of about 800 to 10,000, an OH number between 0.1 and 100 and having an acid number of 0.1 to 80, optionally in admixture with aliphatic polyethers or polythioethers which have 1—8 OH groups per molecule and are optionally modified by vinyl polymers, it being possible for both the polyester and the polyether to be acylated before, during or after the polymerisation, are used as the second polymers, and wherein co-grafted polymer dispersions are obtained which contain graft polymers of first and second polymers linked via vinyl polymer bridges and which consist of

I. 10—90% by weight of organopolysiloxanes containing terminal OH functional groups,
II. 5—85% by weight of optionally acylated polyesters,
III. 0—50% by weight of optionally acylated polyethers and
IV. 5—85% of polymerised units of vinyl compounds and wherein the sum of components I—IV is always 100%.

2. Co-grafted polymer dispersions according to Claim 1, characterised in that component IV consists of polymerised units of vinyl esters, α,β-unsaturated carboxylic acids, derivatives of α,β-unsaturated mono- or dicarboxylic acids, vinyl aromatics, α-olefins, halogenated vinyl monomers, vinyl ether, allyl compounds, divinyl compounds or (meth)acrylates of polyhydric alcohols or mixtures of these monomers.

3. Co-grafted polymer dispersions according to one of Claims 1 or 2, characterised in that component IV consists of 0—85% by weight of polymerised units of vinyl acetate and 5—80% by weight of polymerised units of alkyl (meth)acrylates with 1—8 C atoms in the alkyl component, (meth)acrylamide, N-alkylsubstituted (meth)acrylamides, (meth)acrylonitrile or mixtures thereof, based in each case on the total dispersion.

4. Co-grafted polymer dispersions according to one of Claims 1 or 2, characterised in that component I constitutes 30—90% by weight and component II constitutes 5 to 65% by weight, component III is not present and component IV consists of 5—65% by weight of polymerised units of
a) 5—90% by weight of styrene,
b) 10—95% by weight of alkyl (meth)acrylates with 1—8 C atoms in the alkyl component, and
c) 0—85% by weight of (meth)acrylonitrile, the sum of components a)—c) always being 100%.

5. Co-grafted polymer dispersions according to one of Claims 1 to 3, characterised in that component I constitutes 30—90% by weight and component II constitutes 5—65% by weight, component III is not present and component IV consists of 5—65% by weight of polymerised units of vinyl acetate.

6. Co-grafted polymer dispersions according to one of Claims 1 to 3, characterised in that component I consists of 10—90% by weight of organopolysiloxanes containing terminal OH functional groups and 0—30% by weight of organopolysiloxanes with trimethylsilyl end groups, calculated in each case in relation to the total dispersion, component II consists of 5—60% by weight of aliphatic or mixed aliphatic-aromatic polyesters and component III is not present.

7. Process for the preparation of co-grafted polymer dispersions according to one of Claims 1 to 6, characterised in that mixtures of
a) 8—90% by weight of organopolysiloxanes containing terminal OH functional groups,
b) 4.999—85% by weight of aliphatic or mixed aliphatic-aromatic polyesters,
c) 0—50% by weight of a polyether,
d) 5—85% by weight of one or more vinyl monomers,
e) 0.001—2% by weight of one or more radical-forming agents,
f) 0—5% by weight of a regulator, and
g) 0—5% by weight of a carboxylic acid, or of a carboxylic acid anhydride or carboxylic acid halide,
the sum of components a to g always being 100%, are subjected to a polymerisation and, if appropriate, acylation reaction, at temperatures between −20°C and +250°C.

8. Organopolysiloxane compositions which can be crosslinked at room temperature and which contain the co-grafted polymer dispersions according to Claims 1 to 6 and in addition crosslinking agents, curing catalysts, fillers and, if appropriate, other additives.

9. Use of organopolysiloxane compositions which can be crosslinked at room temperature and which contain co-grafted polymer dispersions according to one of Claims 1 to 6, as one- or two-component systems for sealing compositions.

**Revendications**

1. Dispersions de copolymères greffés stables et durcissables à la température ambiante que l'on obtient par polymérisation greffée de monomères vinyliques en présence de mélanges d'un premier et d'un deuxième polymère;

comme premier polymère, on utilise des diorganopolysiloxanes à fonction OH de formule:

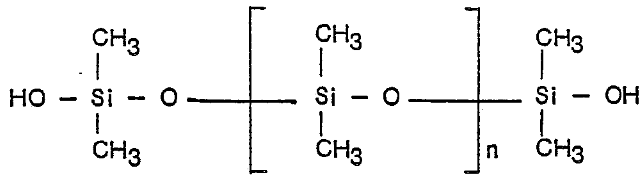

n = 10 bis 5000

les groupes méthyle pouvant être remplacés jusqu'à 30% molaires par des groupes éthyle, vinyle ou phényle et, comme deuxième polymére, on utilise des polyesters aliphatiques ou aliphatico-aromatiques mixtes d'un poids moléculaire d'environ 800 à 10.000, d'un indice OH compris entre 0,1 et 100 et d'un indice d'acide de 0,1 à 80, éventuellement en mélange avec des polythioéthers ou polyéthers aliphatiques contenant 1—8 groupes OH par molécule et éventuellement modifiés par des polyméres vinyliques, le polyester aussi bien que le polyéther pouvant être acylés avant, pendant ou après la polymérisation, tandis que l'on obtient des dispersions de copolymères greffés qui contiennent des polymères greffés du premier et du deuxième polymère reliés par des ponts de polymére vinylique et qui comprennent:

I. 10—90% en poids d'organopolysiloxanes àfonction OH terminale,
II. 5—85% en poids de polyesters éventuellement acylés;
III. 0—50% en poids de polyéthers éventuellement acylés et
IV. 5—85% de motifs polymérisés de composés vinyliques,

la somme des composants I—IV étant constamment de 100%.

2. Dispersions de copolyméres greffés suivant la revendication 1, caractérisées en ce que le composant IV est constitué de motifs polymérisés d'esters vinyliques, d'acides carboxyliques α,β-insaturés, de dérivés d'acides mono- ou dicarboxyliques α,β-insaturés, d'hydrocarbures aromatiques vinyliques, d'α-oléfines, de monomères vinyliques halogénés, d'éthers vinyliques, de composés allyliques, de composés divinyliques ou d'esters d'acide (méth)acrylique d'alcools polyvalents ou de mélanges de ces monomères.

3. Dispersions de copolymères greffés suivant une des revendications 1 et 2, caractérisées en ce que le composant IV est constitué de 0—85% en poids de motifs polymérisés d'acétate de vinyle et 5—80% en poids de motifs polymérisés d'esters alkyliques d'acide (méth)acrylique, contenant 1 à 8 atomes de carbone dans le composant alkyle d'ester, d'amide d'acide (méth)acrylique, d'amides d'acide (méth)acrylique substitués par un groupe N-alkyle, de (méth)acrylonitrile, ainsi que de leurs mélanges, calculé chaque fois sur toute la dispersion.

4. Dispersions de copolyméres greffés suivant une des revendications 1 et 2, caractérisées en ce que le composant I représente 30—90% en poids et le composant II représente 5—65% en poids, le composant III n'est pas présent et le composant IV est constitué de 5—65% en poids de motifs polymérisés de

a) 5—90% en poids de styrène,
b) 10—95% en poids d'esters alkyliques d'acide (méth)acrylique contenant 1 à 8 atomes de carbone dans le composant alkyle d'ester,
c) 0—85% en poids de (méth)acrylonitrile,

la somme des composants (a)-(c) étant constamment de 100%.

5. Dispersions de copolymères greffés suivant une des revendications 1 à 3, caractérisées en ce que le composant I représente 30—90% en poids et le composant II représente 5—65% en poids, le composant III n'est pas présent et le composant IV est constitué de 5—65% en poids de motifs polymérisés d'acétate de vinyle.

6. Dispersions de copolyméres greffés suivant une des revendications 1 à 3, caractérisées en ce que le composant I est constitué de 10—90% en poids d'organopolysiloxanes à fonction OH terminale, et de 0—30% en poids d'organopolysiloxanes comportant des groupes triméthylsilyle terminaux, calculé chaque fois sur toute la dispersion, tandis que le composant II est constitué de 5—60% en poids de polyesters aliphatiques ou aliphatico-aromatiques mixtes, et le composant III n'est pas présent.

7. Procédé de préparation de dispersions de copolymères greffés suivant une des revendications 1 à 6, caractérisé en ce qu'on soumet, à une réaction de polymérisation et éventuellement à une réaction d'acylation, à des températures comprises entre −20°C et +250°C, des mélanges de:

a) 8—90% en poids d'organopolysiloxanes à fonction OH terminale,
b) 4,999—85% en poids de polyesters aliphatiques ou aliphatico-aromatiques mixtes,
c) 0—50% en poids d'un polyéther,
d) 5—85% en poids d'un ou de plusieurs monomères vinyliques,
e) 0,001—2% en poids d'un ou de plusieurs formateurs de radicaux,
f) 0—5% en poids d'un régulateur,

g) 0—5% en poids d'un acide carboxylique, d'un anhydride d'acide carboxylique ou d'un halogénure d'acide carboxylique,

la somme des composants a à g étant constamment de 100%.

8. Masses d'organopolysiloxanes réticulables à la température ambiante contenant des dispersions de copolyméres greffés suivant les revendications 1 à 6 et, en outre, des agents de réticulation, des catalyseurs de durcissement, des charges et éventuellement d'autres additifs.

9. Utilisation de masses d'organopolysiloxanes réticulables à la température ambiante, contenant des dispersions de copolyméres greffés suivant une des revendications 1 à 6, comme systèmes à un ou à deux composants pour matériaux d'étanchéité.